# EUROPEAN PATENT SPECIFICATION

(11) **EP 1 500 534 B1**
(45) Date of publication and mention of the grant of the patent: **22.12.2010**
(21) Application number: 04017262.9
(22) Date of filing: 22.07.2004
(51) Int. Cl.: B60H 1/24

(54) **Vehicle ventilation system**
Belüftungseinrichtung für ein Fahrzeug
Dispositif de ventilation pour un véhicule

(30) Priority: 23.07.2003 JP 2003278056
(43) Date of publication of application: 26.01.2005
(73) Proprietor: Valeo Systèmes Thermiques, 78321 Le Mesnil St Denis Cedex (FR)
(72) Inventor: Takahashi, Osamu c/o Zexel Valeo Climate Control, Osato-gun Saitama 360-0193 (JP); Nozawa, Kazuo c/o Zexel Valeo Climate Control, Osato-gun Saitama 360-0193 (JP); Ben Fredj, Mounir c/o Zexel Valeo Climate Control, Osato-gun Saitama 360-0193 (JP); Katchi, Kazuhisa c/o Zexel Valeo Climate Control, Osato-gun Saitama 360-0193 (JP); Tsubakida, Toshio c/o Zexel Valeo Climate Control, Osato-gun Saitama 360-0193 (JP); Hara, Shinichi c/o Zexel Valeo Climate Control, Osato-gun Saitama 360-0193 (JP); Yoshida, Akihiko c/o Zexel Valeo Climate Control, Osato-gun Saitama 360-0193 (JP)

(56) References cited:
- EP-A- 0 560 673
- DE-A1- 4 201 164
- FR-A- 2 784 943

## Description

The present invention relates to a vehicle ventilation system for effectively ventilating a vehicle compartment.

Improvements in recent years to the air-tightness characteristics of vehicle compartments have been accompanied by a growing interest in the effects of VOC (Volatile Organic Compounds) on the interior environment of the vehicle, and the reduction of VOC within the vehicle interior is a matter of concern. More specifically, it is now known that the concentration of organic gases generated from the interior trim of a vehicle markedly exceeds the permissible range when it has been parked in the hot sun and the temperature within the vehicle interior reaches temperatures of 60 DEG C or greater. Although there have been several methods considered for the removal of VOC that involve the utilization of, for example, activated carbon or photocatalysts, they are ineffective when the total volume of VOC reaches a high level. In addition, where the interior temperature of the vehicle has risen as a result of the vehicle having been parked in the hot sun, rapid temperature reduction is also necessary.

With this in mind, a variety of methods for ventilating the vehicle interior have hitherto been proposed. Examples of these previously proposed methods include a configuration in which, when the temperature within the vehicle interior is less than a prescribed temperature and the engine is stopped, an air purifier is driven to purify the air within the vehicle interior, and in which, where the temperature within the vehicle interior is higher than a prescribed temperature and the engine is stopped, a blower means is driven (Japanese Patent No. 03-38134), a configuration in which the air within the vehicle interior is automatically ventilated by the rotation of an electric motor fan (Japanese Unexamined Patent Application No. 02-256510), a configuration having means for setting the level of ventilation in response to at least one of either the level of pollutants inside the vehicle or outside the vehicle and means for correcting this set level of ventilation according to the temperature within the vehicle interior (Japanese Unexamined Patent Application No. 61-143211), and a configuration for driving a ventilation fan for ventilating the vehicle interior using a drive circuit that is based on the output from a detection circuit that detects the vehicle interior temperature (Japanese Utility Model Application No. 58-22308). An other example of previously proposed methods is the document EP0560673, which is considered as the closest prior art.

However, in each of the configurations described above, only exterior air is introduced for use in ventilating the vehicle interior, and the air within the vehicle interior cannot be efficiently expelled. As a result of the improved air-tightness characteristics of modern vehicles, a particular demand exists for the development of a configuration by which active ventilation of the vehicle can be performed.

Thereupon, the principle objective of the present invention is to efficiently ventilate the interior of the vehicle. An additional objective is, because of the correlation that exists between the level of generated VOC and the temperature within the vehicle, to increase this level of ventilation when the temperature increases and to effectively reduce both the VOC within the vehicle interior and the temperature within the vehicle interior.

To achieve the above-noted objectives, the vehicle ventilation system pertaining to this invention comprises at least two connecting parts that afford connection between the vehicle interior and the vehicle exterior, opening means that essentially simultaneously open the abovementioned respective connecting parts, an evaporator and a blower for ventilation arranged in the vicinity of at least one of the opening means, characterized in that it comprises an interior temperature detection means that detects the interior temperature of the vehicle, a gas sensor that detects the concentration of gases in the exterior air, a post-evaporation sensor arranged in the downstream side of the evaporator, a control unit receiving signals from the gas sensor, the interior temperature detection means and the post-evaporation sensor, the control unit driving the control of opening means and the control of rotational direction or rotational speed of the blower, and an air amount changeover means that, accompanying the rise in the interior temperature of the vehicle detected by the interior temperature detection means, increases the amount of air blown by the blower.

Accordingly, by virtue of the fact that, according to this configuration, an intake of exterior air through one of the connecting parts and an exhaust of interior air through the other connecting part occurs as a result of the operation of a fan device upon the essentially simultaneous opening of the two connecting parts by the opening means, a forced ventilation of the vehicle interior can be efficiently performed.

In a ventilation system such as this in which, by way of example, the abovementioned two connecting parts are configured from an intake passage provided in the rear part of the vehicle compartment and an exhaust passage provided in the front part of the vehicle compartment, the exhaust passage may be configured from an HVAC provided in the front part of the vehicle compartment (Claim 2), and the abovementioned fan device may be configured to constitute the blower unit of the HVAC provided in the front part of the vehicle (Claim 3).

More specifically, the exhaust passage is configured from the blower unit of the HVAC which unit affords the introduction of vehicle interior air and a return passage that connects an exterior air introducing port with the downstream side by means of the blower of the blower unit, and the opening means of the exhaust passage is configured from an opening/closing damper provided either in the inlet of the return passage or along the length thereof (Claim 4), wherein the abovementioned exhaust passage, which is configured from an internal channel that leads from a defrost blow-out port to the exterior air introducing port of the HVAC (Claim 5), is preferably configured from an internal channel that leads from the blow-out port, vent blow-out port and foot blow-out port to the exterior air introducing port of the abovementioned HVAC (Claim 6).

In addition, in this ventilation system, in which the abovementioned two connecting parts are configured from an intake passage that opens into the front part of the vehicle compartment and an exhaust passage that opens into the rear part of the vehicle compartment, the fan device may be provided either above the exhaust passage or in the vicinity thereof (Claim 7). More specifically, the intake passage, which is configured from an internal channel that leads from the exterior air introducing port to the vent blow-out port of the HVAC (Claim 8), is preferably configured from an internal channel that leads from the exterior air introducing port to the defrost blow-out port of the HVAC (Claim 9).

Furthermore, in this vehicle ventilation system in which two connecting parts are configured from an intake passage that opens into at least one of either the front part of the vehicle compartment or the rear part of the vehicle compartment and an exhaust passage that opens into the middle part of the vehicle compartment, the fan device may be provided either above the exhaust passage or in the vicinity thereof (Claim 10). More specifically, the intake passage, which may be configured from an internal channel that leads from the exterior air introducing port to the vent blow-out port and foot blow-out port of the HVAC (Claim 11), or which may be configured from an internal channel that leads from the exterior air introducing port to the defrost blow-out port of the HVAC (Claim 12), or which may be configured from an internal channel that leads from the exterior air introducing port to the vent blow-out port of the HVAC (Claim 13), may be provided in the HVAC in the rear part of the vehicle (Claim 14). In this configuration, the exhaust passage is preferably configured from a ventilation duct provided in the vehicle, and the fan device is preferably configured from a ventilation module provided in the ventilation duct (Claim 15).

Furthermore, in this ventilation system in which two connecting parts are configured from an intake passage that opens into the front part of the vehicle compartment and an exhaust passage that opens into the rear part of the vehicle compartment, the fan device is provided above the intake passage or in the vicinity thereof (Claim 16). More specifically, the intake passage is configured from a channel that leads from the exterior air introducing port to the vent blow-out port of the HVAC (Claim 17), and the exhaust passage may be provided on both the left and right sides of the vehicle (Claim 18). In addition, the intake passage may be configured from a channel that leads from the exterior air introducing port to the defrost blow-out port, vent blow-out port and foot blow-out port of the HVAC (Claim 19).

In addition, by virtue of the fact that the higher the temperature within the vehicle interior the greater the level of generated VOC, the above-described configuration preferably comprises an interior temperature detection means that detects the interior temperature of the vehicle, as well as an air amount changeover means that, accompanying the rise in the interior temperature of the vehicle detected by the interior temperature detection means, increases the amount of air blown by the fan device (Claim 20).

By virtue of the fact that, based on the present invention as described above, the ventilation system is configured to comprise at least two connecting parts that afford connection between the vehicle interior and the vehicle exterior, an opening means that essentially simultaneously opens the abovementioned respective connecting parts, and a fan device for ventilation arranged in the vicinity of at least one of the opening means, active introduction of exterior air and discharge of vehicle interior air can be performed, and efficient ventilation of the vehicle interior is possible. In addition, by virtue of the fact that a means based on a fan device is provided to increase the amount of blown air accompanying temperature rises in the vehicle interior, the level of ventilation can be increased when the temperature is high, the level of VOC which increases when the temperature is high can be effectively reduced and, in addition, the temperature of the vehicle interior can be effectively reduced.

A description of a best embodiment mode of the present invention is given below.
Figure 1 is a schematic diagram of a vehicle to which the vehicle ventilation system pertaining to the present invention has been fitted;
Figure 2 is a schematic diagram of an air conditioner device (HVAC) mounted on the vehicle;
Figure 3 is a flow chart that shows an example of the control operation implemented by the control unit;
Figure 4 is a schematic diagram of model 1 that constitutes a first example configuration of the ventilation system;
Figure 5 is a schematic diagram of model 2 that constitutes a second example configuration of the ventilation system;
Figure 6 is a diagram of an example configuration in which the blower unit of the HVAC has been improved;
Figure 7 is a schematic diagram of model 3 that constitutes a third example configuration of the ventilation system in which the configuration of Figure 6 is utilized;
Figure 8 is a schematic diagram of model 4 that constitutes a fourth example configuration of the ventilation system;
Figure 9 is a schematic diagram of model 5 that constitutes a fifth example configuration of the ventilation system;
Figure 10 is a schematic diagram of model 6 that constitutes a sixth example configuration of the ventilation system;
Figure 11 is a schematic diagram of model 7 that constitutes a seventh example configuration of the ventilation system;
Figure 12 (a) is a schematic diagram of a vehicle to which another vehicle ventilation system pertaining to the present invention has been fitted, and Figure 12 (b) is a schematic diagram of model 8 that constitutes an eighth example configuration of the ventilation system;
Figure 13 is a schematic diagram of model 9 that constitutes a ninth example configuration of the ventilation system;
Figure 14 is a schematic diagram of model 10 that constitutes a tenth example configuration of the ventilation system;
Figure 15 is a schematic diagram of model 11 that constitutes an eleventh example configuration of the ventilation system;
Figure 16 is a schematic diagram of model 12 that constitutes a twelfth example configuration of the ventilation system;
Figure 17 is a schematic diagram of model 13 that constitutes a thirteenth example configuration of the ventilation system;
Figure 18 is a graph that shows the ventilation frequency per hour and ventilation efficiency of each model; and
Figure 19 is a characteristics graph that shows the required ventilation frequency with respect to the interior temperature of the vehicle.

The example described here, as a typical ventilated vehicle, uses a wagon car comprising a vehicle compartment that extends in the front-rear direction of the vehicle as an example, and in the description given below three rows of seats 2a, 2b, 2c extending in the width direction of the vehicle are arranged in the vehicle compartment.

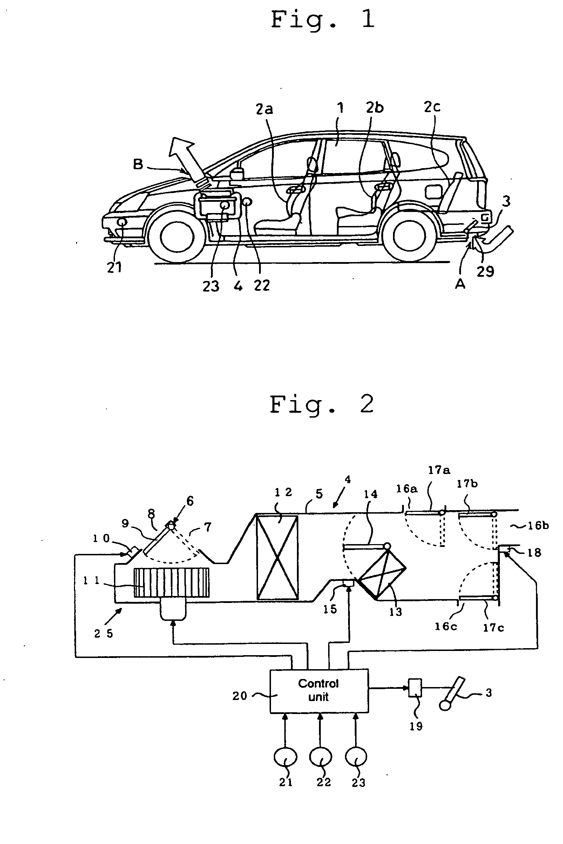

Figure 1 shows a first embodiment thereof. In this example, the vehicle comprises two connecting parts that afford connection between the vehicle interior and the vehicle exterior which are configured from an intake passage A provided in the rear part of a vehicle compartment 1 and an exhaust passage B provided in the front part of the vehicle compartment, wherein the respective connecting parts (intake passage A and exhaust passage B) are opened and closed by opening means that open essentially simultaneously. Here, the intake passage A is configured from a ventilation hole 29 provided in the floor of the rearmost part of the compartment, that is to say, in the rear part of the third row of seats 2c, and the exhaust passage B is configured from an HVAC (air-conditioning unit) 4 housed within an instrument panel in the front part of the vehicle. In addition, the opening means for the intake passage A provided in the rear part of the vehicle is configured from an opening/closing damper 3 for opening and closing the ventilation hole 29 by the drive of an actuator 19 and, in addition, the opening means of the ventilation passage B is configured from a later-described interior-exterior air changeover device 6 of the HVAC 4.

In the HVAC 4 as shown in Figure 2, which in itself is a well-known device, an interior-exterior changeover device 6 is provided on the most upstream side of an air conditioner duct 5, and this interior-exterior changeover device 6, in which an interior-exterior changeover door 9 is arranged in the section at which the interior air introducing port 7 and exterior air introducing port 8 branch, is configured so that the interior-exterior changeover door 9 is operated by an actuator 10 to select the air to be introduced into the air conditioner duct 5 as either interior air or exterior air so as to obtain the desired suction mode.

A blower 11 of the blower unit, which is provided in such a way as to face out to the interior air introducing port 7 and exterior air introducing port 8 of the interior-exterior changeover device 6, draws air into the air conditioner duct 5 and blows it to the downstream side, and an evaporator 12 is arranged to the rear of this blower 11. In addition, a heater core 13 is arranged in the rear of the evaporator 12 and air mix doors 14 are provided in the upstream side of the heater core 13 and, by adjustment of the degree of opening of the air mix doors 14 by an actuator 15, the ratio of the air that passes through the heater core 13 and the air that bypasses the heater core 13 can be altered wherein, as a result, the temperature of the air blown out into the vehicle compartment can be controlled.

The downstream side of the abovementioned air conditioner duct 5 opens into the vehicle compartment by way of a defrost blow-out port 16a, vent blow-out port 16b and foot blow-out port 16c, wherein the blow-out mode, by the opening/closing control by an actuator 18 of mode doors 17a to 17c provided in the branched section of the blow-out ports 16a to 16c, is able to be altered.

The abovementioned evaporator 12, which is configured from a refrigeration cycle coupled using pipes to a compressor, condenser, receiver tank and expansion valve not shown in the diagram, supplies a refrigerant to the evaporator 12 by the action of the compressor and cools the air that passes through the evaporator 12. In addition, the heater core 13, to which the engine cooling water is supplied, heats the air that passes there-through.

The above-described doors (opening/closing damper 3, intake door 9, air mix doors 14, mode doors 16a to 16c) and blowers 11 are controlled by a control unit 20. The control unit 20 comprises, for example, a central processing unit (CPU), read-only memory (ROM), random access memory (RAM) and input/output port (I/O) not shown in the diagram, and is configured to comprise a control circuit for the drive control of the doors and a control circuit for the drive control of the blower wherein, for example, signals from a gas sensor 21 that detects the concentration of gases in the exterior air, signals from a compartment temperature sensor 22 that detects the compartment temperature, and signals from a post-evaporation sensor 23, arranged in the downstream side of the evaporator 12, that detects the temperature of the air that passes through the evaporator 12 are input thereto and, in accordance with the prescribed program assigned to the memory, these input signals are processed to perform the positional control of the doors (opening/closing damper 3, intake door 9, air mix doors 14 and mode doors 16a to 16c), as well as to control the rotational direction or rotational speed (blower capacity) of the blower 11.

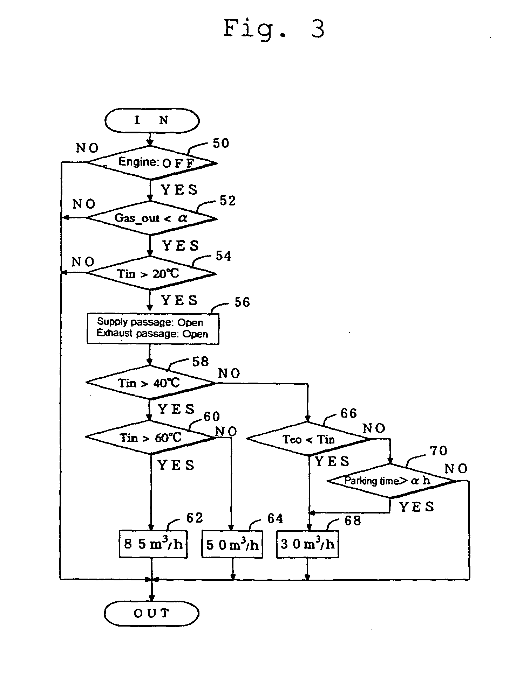

Figure 3 shows an example of a control operation example based on the above-described control unit 20 and, in the description of the example of the control operation given below, the control unit 20, which shifts to the control routine via a prescribed processing such as initial setting after switching ON of an ignition switch, in steps 50 to 54 adjudges the propriety of ventilating a parked vehicle.

That is to say, in step 50, it adjudges whether or not the vehicle is in the parked state by determining whether or not the engine is stopped and, in step 52, it adjudges whether or not the concentration of gases in the exterior air detected by the gas sensor 21 is lower than a prescribed level and whether or not there will be a problem if the exterior air is introduced to ventilate the vehicle interior. In addition, in step 54, it adjudges whether or not the interior temperature of the vehicle detected by the vehicle interior sensor 22 is higher than 20°C and whether there is a need to reduce the interior temperature of the vehicle or a need to reduce the VOC by ventilation.

By virtue of the fact that, in the above-noted steps 50 to 54, ventilation of the vehicle compartment is either inappropriate or unnecessary if the engine is running or the concentration of gases in the exterior air gas is above a prescribed level or the interior temperature of the vehicle is low, no ventilation processing is implemented in these particular cases and, skipping this processing routine, another processing is implemented. In contrast to this, when the engine is stopped, the exterior air is clean and the interior temperature of the vehicle is high, the process moves to step 56 and the intake passage A and exhaust passage B are opened.

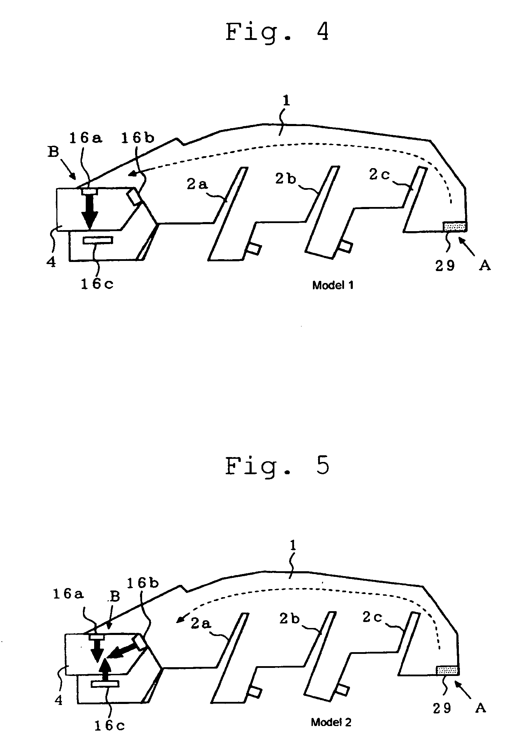

Here, the exhaust passage B which, more specifically, is configured from an internal channel formed between the vehicle interior and vehicle exterior from the defrost blow-out port to the exterior air introducing port and which sets the blow-out mode of the HVAC to the mode in which the defrost blow-out port is opened and sets the suction mode to the exterior air introducing mode, forms a flow of air from the rearmost part of the vehicle compartment 1 to the defrost blow-out port as shown in Figure 4. A fan device for ventilation arranged in the vicinity of the opening means for the intake passage is configured from the blower 11 of the HVAC 4. This model is referred to hereafter as model 1.

In subsequent steps, the level of ventilation is controlled in response to the temperature of the vehicle interior. That is to say, in step 58, a judgment is made as to whether or not the interior temperature of the vehicle is higher than 40°C and, in addition, in step 60, a judgment is made as to whether or not the interior temperature of the vehicle is higher than 60°C and, if adjudged to be higher than 60°C, the process moves to step 62 where the rotational speed of the fan device (blower 11) is controlled and the level of ventilation is increased in such a way that the level of blown air is 85m³ per hour. In addition, if the interior temperature of the vehicle is less than 60°C but greater than 40°C, the process moves to step 64 where the rotational speed of the blower 11 is controlled in such a way as to produce a medium level of ventilation in which the level of blown air is 50m³ per hour.

Furthermore, if it is adjudged that the interior temperature of the vehicle is less than 40°C but higher than 20°C, the process moves to step 66 where a judgment is made as to whether the temperature of the air Teo that has passed through the evaporator 12 detected by the post-evaporation sensor 23 is lower than a temperature Tin detected by a compartment temperature sensor 22 and, if adjudged lower, the process moves to step 68 where the rotational speed of the blower is controlled and the level of ventilation lowered in such a way that the level of blown air is 30m³ and, by virtue of the fact that, where Teo is greater than Tin, there is little need for ventilation, the process moves to step 70 where a judgment is made as to whether or not the parking time of the vehicle has exceeded a prescribed time (α time) and, as ventilation is deemed unnecessary if the parking time is within the prescribed time (α time) the processing routine is completed however, as ventilation is deemed necessary if the prescribed parking time has elapsed, the process moves to step 68 where the rotational speed of the blower 11 is controlled in such a way that the level of blown air is 30m³.

Accordingly, by virtue of the fact that, in this configuration, the two connecting parts for connecting the exterior and interior of the compartment are essentially simultaneously opened to operate the blower 11 during ventilation, exterior air can be suctioned through the intake passage and air within the vehicle interior can be discharged through the exhaust passage to perform the efficient forced ventilation of the vehicle interior. In addition, although the higher the temperature of the vehicle interior the greater the generated VOC and, moreover, the greater the need for the vehicle interior to be cooled, by virtue of the fact that, in this configuration, the higher the interior temperature of the vehicle the greater the level of ventilation of the vehicle compartment that occurs, a rapid reduction in VOC concentration can be achieved and the temperature of the vehicle interior can be rapidly reduced.

Although the exhaust passage in the above-described configuration is configured from an internal channel that leads from the defrost blow-out port to the exterior air introducing port of the HVAC, as is shown in Figure 5, it may also be configured from an internal channel that leads from the defrost blow-out port, vent blow-out port and foot blow-out port to the exterior air introducing port of the HVAC. This configuration is referred to as model 2.

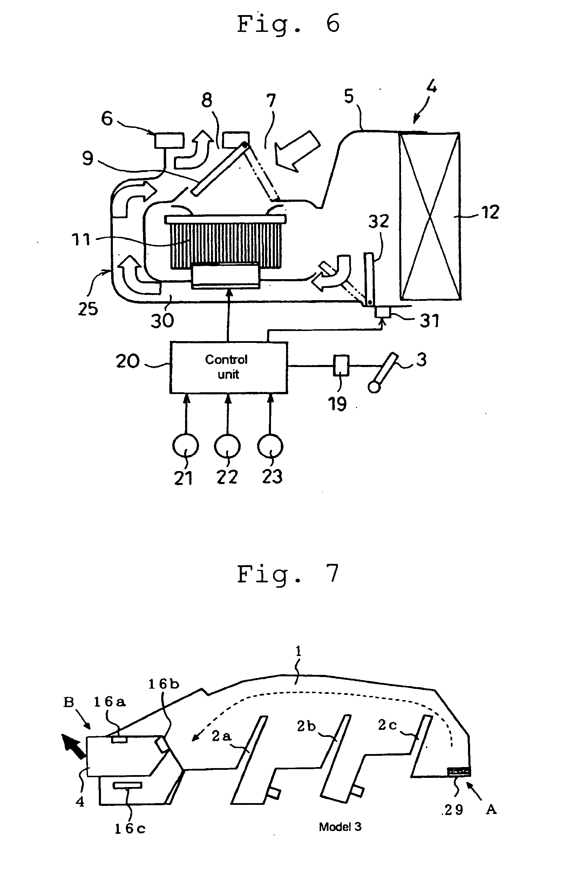

In addition, as an improvement to the above-described HVAC, the interior air of the vehicle may be discharged to the exterior as the interior air introduction of the HVAC is implemented. That is to say, as shown in Figure 6, a return passage 30 is formed in the HVAC from the downstream side of the blower 11 on the outer perimeter of the blower unit along the exterior air introducing port 8, the return passage 30 is able to be opened and closed by a damper 32 driven by an actuator 31, and the return passage 30 is opened during ventilation wherein, as shown in Figure 7, some of the interior air drawn through the interior air introducing port 7 may be discharged to the exterior through the exterior air introducing port 8 by way of the return passage 30.

Here, although a damper 32 that functions in the opened state as a guide plate for guiding the air fed from upstream to the return passage 30 is provided in an inlet section of the return passage 30, this may also be provided along the length of the return passage 30. In addition, although the return passage 30 in this example is configured in such a way as to lead to the exterior air introducing port 8, it may be connected to the vehicle exterior by way of a separate opening hole.

Accordingly, in this configuration, the air introduced into the vehicle interior by way of the intake passage A, which flows in the manner shown in Figure 7, is suctioned though the interior air introducing port 7 of the HVAC 4 and discharged to the exterior air. The model of this configuration is referred to hereafter as model 3.

It should be noted that, although the damper 3 of model 2 and model 3 for opening and closing the intake passage A is identical to the example of the abovementioned model 1, in the abovementioned step 56, in response to the command for opening of the exhaust passage B, based on model 2, the intake door 9 is set to the exterior air introducing mode and the blow-out mode is set to a mode in which all the blow-out ports are opened. In addition, based on model 3, the interior-exterior changeover device 6 is set to the interior air introducing mode, and the damper 32 is set to the opened state.

By virtue of the fact that the remainder of the configuration is identical to the example of the above-described configuration, identical symbols have been assigned to identical component parts and sections and so on, and the description thereof has been omitted. Using this example configuration, an effective forced ventilation of the vehicle interior can be performed, a rapid reduction of the VOC concentration by promoting the ventilation of the vehicle interior can be achieved, and the interior temperature of the vehicle can be rapidly reduced.

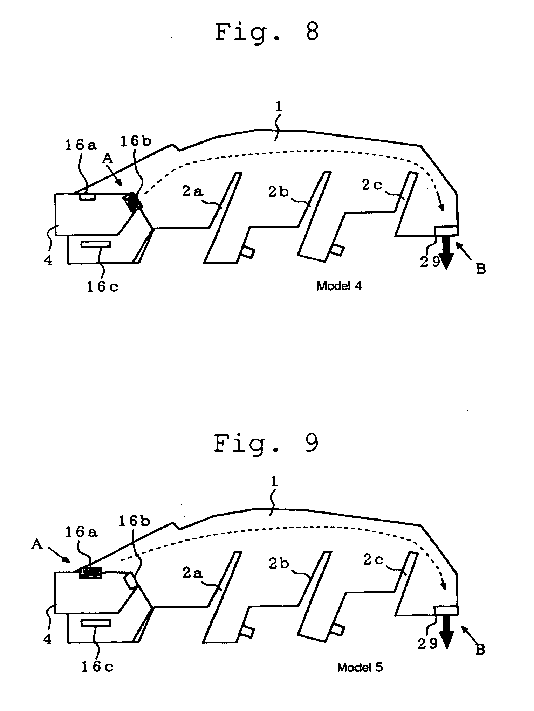

Figure 8 and Figure 9 show an example configuration in which the intake passage A is formed in the front part of the vehicle compartment and the exhaust passage B is formed in the rear part of the vehicle compartment. The intake passage is configured from an HVAC 4 housed in the instrument panel of the front part of the vehicle compartment, and the exhaust passage B is configured from a ventilation hole 29 provided in the floor of the rearmost part of the vehicle, that is to say, the rear of the third row of seats 2c, and the intake passage A and exhaust passage B are opened and closed by opening means that are essentially simultaneously opened. Here, the opening means of the intake passage A is configured from an interior-exterior changeover device 6 of the HVAC (air conditioner unit) 4 arranged in the instrument panel, and the opening means of the exhaust passage B is configured from an opening/closing damper 3 for opening and closing the ventilation hole 29.

In the configuration shown in Figure 8, in response to the command for the opening of the exhaust passage of the abovementioned step 56, the interior-exterior air changeover device 6 is set to the exterior air introducing mode and, in addition, the blow-out mode is set to the vent mode to form an internal channel from the exterior air introducing port 8 to the vent blow-out port 16b for introducing exterior air into the vehicle interior. The model of this configuration is referred to hereafter as model 4.

In addition, in the configuration shown in Figure 9, in response to the command for the opening of the exhaust passage of the abovementioned step 56, the intake door 9 is set to the exterior air introducing mode and, in addition, the blow-out mode is set to the defrost mode to form an internal channel from the exterior air introducing port 8 to the defrost blow-out port 16a for introducing exterior air into the vehicle interior. The model of this configuration is referred to hereafter as model 5.

By virtue of the fact that the remainder of the configuration is identical to the examples of the abovementioned configuration, identical symbols have been assigned to identical component parts and sections and so on, and the description thereof has been omitted. In the configurations of model 4 and model 5, an effective forced ventilation of the vehicle interior can be performed, a rapid reduction of the VOC concentration by promoting the ventilation of the vehicle interior can be achieved, and the interior temperature of the vehicle can be rapidly reduced.

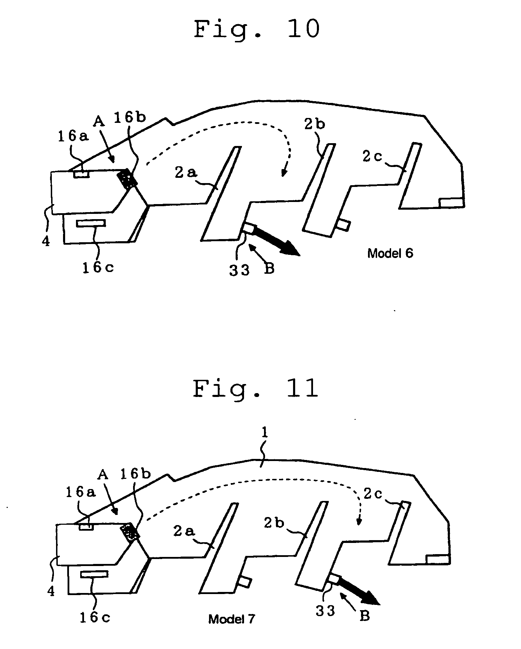

Figure 10 and Figure 11 show example configurations in which the intake passage A is formed in the front part of the vehicle compartment and the exhaust passage B is formed in the middle of the vehicle compartment. The intake passage is configured from the HVAC housed in the instrument panel of the front part of the vehicle compartment, and the exhaust passage B is configured from a ventilation hole 33 provided in the lower part of the seat, wherein the intake passage A and exhaust passage B are opened and closed by opening means that are essentially simultaneously opened. Here, the opening means of the intake passage A is configured by the abovementioned interior-exterior changeover device 6 of the HVAC (air conditioner unit) 4 arranged in the instrument panel, and the opening means of the exhaust passage B is configured from an opening/closing damper not shown in the diagram provided in the lower part of the seat. A fan device for ventilation configured from the abovementioned blower 11 is arranged in the vicinity of the opening means of the intake passage A of the HVAC 4.

In the configuration shown in Figure 10, the exhaust passage B, which is opened by the opening/closing damper provided in the lower part of the second row of seats 2b, sets the blow-out mode of the HVAC 4 to the mode for opening the vent blow-out port 16b and then sets the suction mode to the exterior air introducing mode to afford connection between the vehicle interior and exterior by way of the defrost blow-out port and exterior air introducing port wherein, as shown in the diagram, a ventilation passage along which the air flows from the vent blow-out port to the lower part of the second row of seats 2b is formed. The model of this configuration is referred to hereafter as model 6.

In addition, in the configuration shown in Figure 11, the exhaust passage, which is opened by the opening/closing damper provided in the lower part of the third row of seats 2b, sets the blow-out mode of the HVAC 4 to the mode for opening the vent blow-out port 16b and then sets the suction mode to the exterior air introducing mode to afford connection between the vehicle interior and exterior by way of the defrost blow-out port and exterior air introducing port wherein, as shown in the diagram, a ventilation passage along which the air flows from the vent blow-out port to the lower part of the third row of seats 2b is formed. The model of this configuration is referred to hereafter as model 7.

By virtue of the fact that the remainder of the configuration is identical to the examples of the abovementioned configuration, identical symbols have been assigned to identical component parts and sections and so on, and the description thereof has been omitted. In the configurations of model 10 and model 11, an effective forced ventilation of the vehicle interior can be performed, a rapid reduction of the VOC concentration by promoting the ventilation of the vehicle interior can be achieved, and the interior temperature of the vehicle can be rapidly reduced.

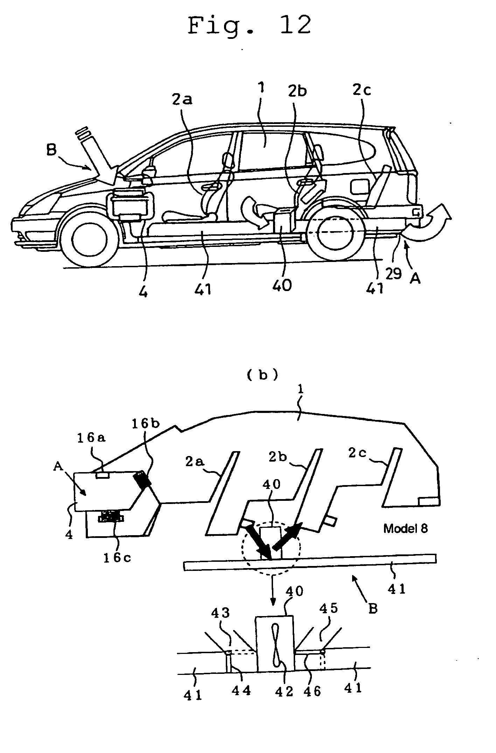

Next, in the configuration shown in Figure 12, in which a ventilation module 40 arranged in the floor part of the vehicle is utilized, the ventilation module 40 is provided along a ventilation duct 41, laid from the front to the rear in the floor part of the vehicle, of which one end opens into the lower part of the front part of the vehicle compartment and the other end connects to the ventilation hole 29 formed in the rear part of the vehicle. In the ventilation module 40, in which the ventilation fan 42 is housed in the inner part, the upstream side of the ventilation fan 42 connects to the middle of the vehicle compartment by way of an opening part 43 provided to open into the middle of the vehicle compartment and, using a damper 44 provided in the ventilation duct 41, the air drawn into the ventilation module 40 is selected to be either suctioned through the front part of the vehicle compartment or suctioned through the middle of the vehicle compartment. In addition, the downstream side of the ventilation fan 42 also connects to the middle of the vehicle compartment by way of an opening part 45 that opens into the middle of the vehicle compartment and, using a damper 46 provided in the ventilation duct 41, the air fed out from the module 40 can be selected to either be supplied to the middle of the vehicle compartment or to be discharged to the exterior of the vehicle compartment.

In the abovementioned step 56, in response to the command for the opening of the exhaust passage B, the HVAC 4 is set to the exterior air introducing mode, the damper 46 is set to the closing position of the opening part 45, the exterior air is introduced by way of the HVAC 4, and the vehicle interior air is discharged to the exterior by the ventilation module 40 by way of the ventilation duct 41 from either the front part or middle part of the vehicle compartment. The model of this configuration is referred to hereafter as model 8.

By virtue of the fact that the remainder of the configuration is identical to the examples of the abovementioned configuration, identical symbols have been assigned to identical component parts and sections and so on, and the description thereof has been omitted. In the configuration of model 8, by virtue of the fact that the air is discharged from the HVAC 4 to the exterior by way of the ventilation module 40, an effective forced ventilation of the vehicle interior can be performed, a rapid reduction of the VOC concentration by promoting the ventilation of the vehicle interior can be achieved, and the interior temperature of the vehicle can be rapidly reduced.

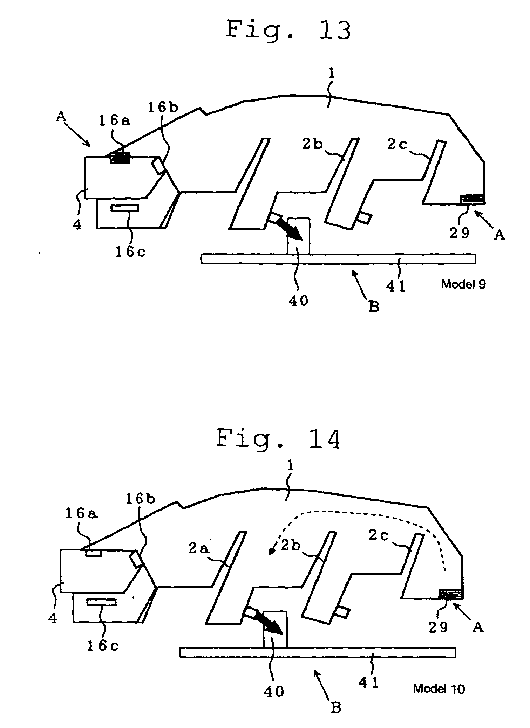

As shown in Figure 13, the ventilation duct configuration that utilizes the ventilation module 40 may be configured so that the blow-out mode of the HVAC 4 is set to a mode to open a defrost blow-out port 16a and the suction mode thereof is set to the exterior air introducing mode, and so that a connecting part configured by a ventilation hole 29 for connecting the exterior and interior of the vehicle is provided in the rear part of the vehicle compartment wherein, using the ventilation module 40, air is suctioned from the middle of the vehicle compartment and discharged to the exterior by way of the ventilation duct 41. The model of this configuration is referred to hereafter as model 9.

In addition, as is shown in Figure 14, an intake passage may be formed which, during ventilation, discharges the air introduced through the rear part of the vehicle compartment through the middle of the vehicle compartment to the exterior by way of the ventilation module. The model of this configuration is referred to hereafter as model 10.

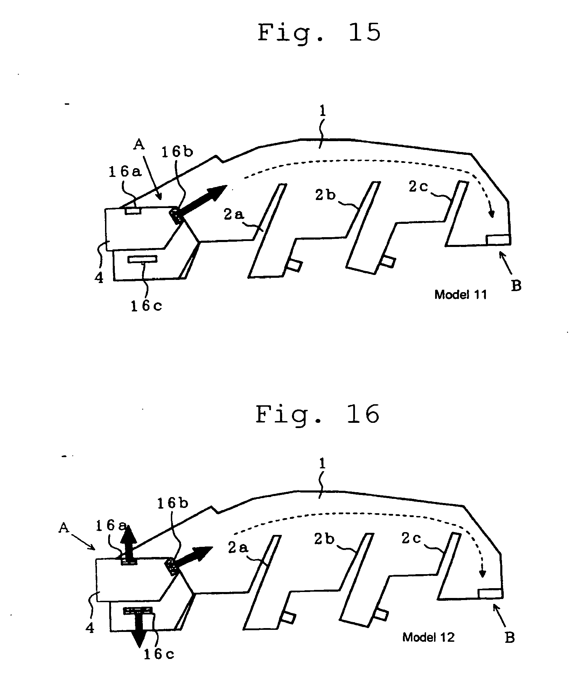

Furthermore, Figure 15 to Figure 17 show examples in which at least two connecting parts that afford connection between the vehicle interior and vehicle exterior are configured from an intake passage A that opens into the front part of the vehicle compartment and an exhaust passage B that opens into the rear part of the vehicle compartment. In these examples, the intake passage A is configured from an HVAC 4 that is housed in the instrument front panel, and the exhaust passage B is configured from a ventilation hole 29 provided in the floor of the rear part of the third row of the seats 2c, that is to say, in the rear part of the vehicle compartment. In addition, a fan device arranged in the vicinity of the opening means of the intake passage A is configured from the abovementioned blower 11 of the HVAC 4. In addition, the opening means of the intake passage A is configured from a later-described interior-exterior changeover device of the HVAC 4, and the opening means of the exhaust passage B, in the same way as the abovementioned example configuration, is configured from an opening/closing damper not shown in the diagram which is opened and closed by an actuator.

In the example configuration shown in Figure 15, in response to the command for the opening of the exhaust passage B in the abovementioned step 56, the blow-out mode of the HVAC 4 is set to the mode for opening the vent blow-out port 16b and, in addition, the suction mode is set to the exterior air introducing mode to connect the interior and exterior of the vehicle compartment by way of the HVAC 4 to afford the flow of air from the vent blow-out port 16b to the rear part of the vehicle compartment. The model of this configuration is referred to hereafter as model 11.

In addition, in the example configuration shown in Figure 16, in response to the command for the opening of the exhaust passage B, the blow-out mode of the HVAC 4 is set to the mode for the opening of the defrost blow-out port 16a, vent blow-out port 16b and the foot blow-out port 16c, and the suction mode is set to the exterior air introducing mode to connect the interior-exterior of the vehicle compartment by way of the HVAC 4 to afford the flow of air from each of the blow-out ports 16a to 16c to the rear part of the vehicle. The model of this configuration is referred to hereafter as model 12.

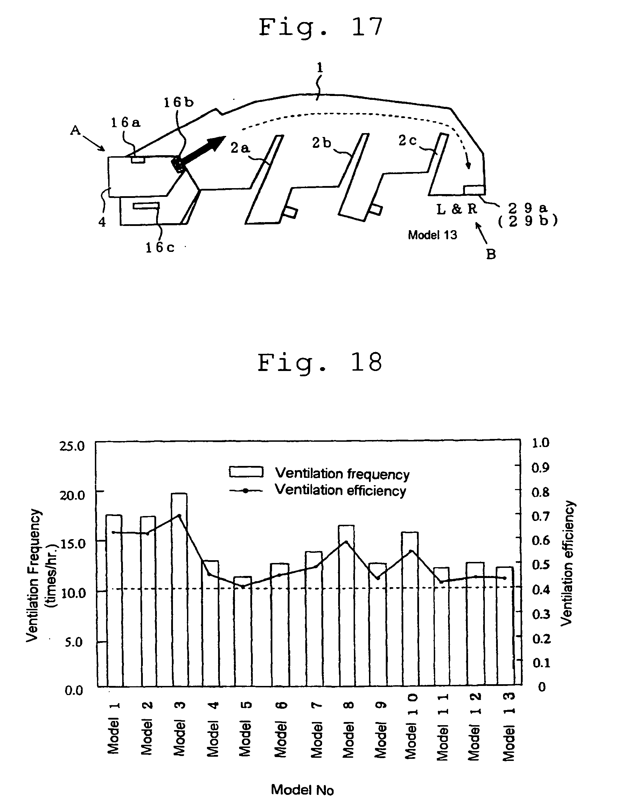

In addition, in the example configuration shown in Figure 17, the exhaust passage B is configured from ventilation holes 29a, 29b provided in the floor of both sides to the rearmost part of the vehicle compartment, that is to say, both the left and right end parts to the rear of the third row of seats 2c and, during ventilation, the blow-out mode of the HVAC 4 is set to the mode for opening the vent blow-out port 16b and, in addition, the suction mode is set to the exterior air introduction mode to connect the interior and exterior of the vehicle compartment by way of the HVAC 4 and to afford the flow of air along a diagonal line from the vent blow-out port 16b to the corner of the rear part of the vehicle compartment. The model of this configuration is referred to hereafter as model 13.

In this configuration, by virtue of the fact that a ventilation flow passage is formed during ventilation from the HVAC to the rear part of the vehicle compartment, an effective forced ventilation of the vehicle interior can be performed, a rapid reduction of the VOC concentration by promoting the ventilation of the vehicle interior can be achieved, and the interior temperature of the vehicle can be rapidly reduced.

Incidentally, the ventilation frequency per hour of each of the modules above was measured and the results thereof are shown in Figure 18. Here, the ventilation frequency per hour represents a measurement of the frequency of air exchange of the air within the vehicle interior and the air exterior of the vehicle in a one hour period and, in this measurement, using the fan device, an amount of air equivalent to 25 times the capacity of the vehicle compartment was supplied per hour, and a measurement was made of the number of times the air within the vehicle interior was essentially changed in 1 hour with respect to the supplied volume of air. The ratio of the frequency of exchange per hour with respect to the exchange of air 25 times was taken as the ventilation efficiency. The better the ventilation efficiency the smoother the ventilation with less stagnation of air within the vehicle interior.

According to these measured results, a ventilation efficiency of greater than 40%, which constitutes very good ventilation, was able to be achieved for each module and, notably, the ventilation efficiency achieved by model 3 was outstanding and the ventilation frequency achieved in models 1, 2, 8 and 10 was also very good.

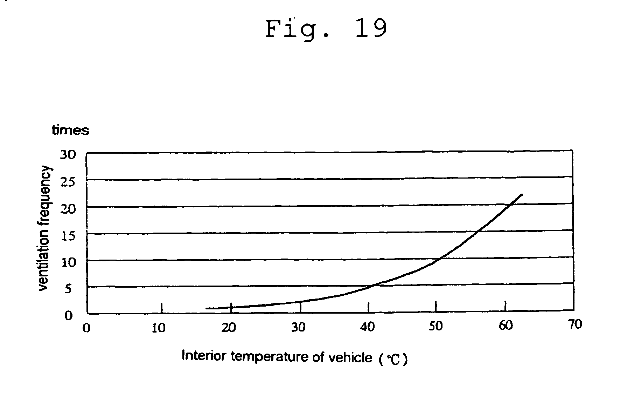

In addition, although, when the interior temperature of the vehicle rises, the ventilation frequency per hour required to maintain the VOC below the standard value (0.4 ppm) is preferably that of Figure 19, by virtue of the fact that a ventilation frequency for each model of 10 or more times can be achieved, each model is able to deal adequately with cases in which the temperature of the vehicle interior is 50°C or greater and, notably, model 3 was able to deal very adequately when the temperature of the vehicle interior was around 60°C.

### [Field of Industrial Utilization]

The present invention can be utilized in a range of industries for the manufacture or use of a system for ventilating a prescribed space.

## Claims

1. Vehicle ventilation system, comprising at least two connecting parts (A,B) that afford connection between the vehicle interior and the vehicle exterior, opening means that essentially simultaneously open the abovementioned respective connecting parts, an evaporator (12) and a blower (11) for ventilation arranged in the vicinity of at least one of the opening means, **characterized in that** it comprises an interior temperature detection means (22) that detects the interior temperature of the vehicle, a gas sensor (21) that detects the concentration of gases in the exterior air, a post-evaporation sensor (23) arranged in the downstream side of the evaporator (12), a control unit (20) receiving signals from the gas sensor (21), the interior temperature detection means (22) and the post-evaporation sensor (23), the control unit (20) driving the control of opening means and the control of rotational direction or rotational speed of the blower (11), and an air amount changeover means that, accompanying the rise in the interior temperature of the vehicle detected by the interior temperature detection means, increases the amount of air blown by the blower (11).

2. Vehicle ventilation system according to Claim 1, **characterized in that** the abovementioned two connecting parts (A,B) are configured from an intake passage (A) provided in the rear part of the vehicle compartment and an exhaust passage (B) provided in the front part of the vehicle compartment, wherein the abovementioned exhaust passage (B) is configured from an HVAC (4) provided in the front part of the vehicle compartment.

3. Vehicle ventilation system according to Claim 1 or Claim 2, **characterized in that** the abovementioned blower device (11) constitutes a blower unit of the abovementioned HVAC (4).

4. Vehicle ventilation system according to Claim 3, **characterized in that** the abovementioned exhaust passage (B) is configured from the abovementioned blower unit (11) of the abovementioned HVAC (4) which unit affords the introduction of vehicle interior air (7) and a return passage that connects an exterior air introducing port (8) with the downstream side by means of the blower of the blower unit, wherein the opening means (9) of the abovementioned exhaust passage is configured from an opening/closing damper provided either in the inlet for the abovementioned return passage or along the length thereof.

5. Vehicle ventilation system according to Claim 2, **characterized in that** the abovementioned exhaust passage (B) is configured from an internal channel that leads from a defrost blow-out port to the exterior air introducing port of the abovementioned HVAC (4).

6. Vehicle ventilation system according to Claim 2, **characterized in that** the abovementioned exhaust passage (B) is configured from an internal channel that leads from the abovementioned HVAC (4) defrost blow-out port, vent blow-out port and foot blow-out port to the exterior air introducing port.

7. Vehicle ventilation system according to Claim 1, **characterized in that** the abovementioned two connecting parts are configured from an intake passaged (A) that opens into the front part of the vehicle compartment and an exhaust passage (B) that opens into the rear part of the vehicle compartment, wherein the abovementioned fan device is provided either above the abovementioned exhaust passage or in the vicinity thereof.

8. Vehicle ventilation system according to Claim 7, **characterized in that** the abovementioned intake passage (A) is configured from an internal channel that leads from the exterior air introducing port to the vent blow-out port of the HVAC (4).

9. Vehicle ventilation system according to Claim 7, **characterized in that** the abovementioned intake passage (A) is configured from an internal channel that leads from the exterior air introducing port to the defrost blow-out port of the HVAC (4).

10. Vehicle ventilation system according to Claim 1, **characterized in that** the abovementioned two connecting parts are configured from an intake passage (A) that opens into at least one of either the front part of the vehicle compartment or the rear part of the vehicle compartment and an exhaust passage (B) which opens into the middle part of the vehicle compartment, wherein the abovementioned fan device is provided either above the abovementioned exhaust passage (B) or in the vicinity thereof.

11. Vehicle ventilation system according to Claim 10, **characterized in that** the abovementioned intake passage (A) is configured from an internal channel that leads from the exterior air introducing port to the vent blow-out port and foot blow-out port of the HVAC (4).

12. Vehicle ventilation system according to Claim 10, **characterized in that** the abovementioned intake passage (A) is configured from a passage formed in the rear part of the vehicle compartment and an internal channel that leads from the exterior air introducing port to the defrost blow-out port of the HVAC (4).

13. Vehicle ventilation system according to Claim 10, **characterized in that** the abovementioned intake passage (A) is configured from an internal channel that leads from the exterior air introducing port to the vent blow-out port of the HVAC (4).

14. Vehicle ventilation system according to Claim 10, **characterized in that** the abovementioned intake passage (A) is provided in the HVAC (4) in the rear part of the vehicle.

15. Vehicle ventilation system according to Claim 10, **characterized in that** the exhaust passage (B) is configured from a ventilation duct provided in the vehicle, wherein the abovementioned blower device (11) constitutes a ventilation module provided in the abovementioned ventilation duct.

16. Vehicle ventilation system according to Claim 1, **characterized in that** the abovementioned two connecting parts are configured from an intake passage (A) that opens into the front part of the vehicle compartment and an exhaust passage (B) that opens into the rear part of the vehicle compartment, wherein the abovementioned blower device (11) is provided above the abovementioned intake passage (A) or in the vicinity thereof.

17. Vehicle ventilation system according to Claim 16, **characterized in that** the abovementioned intake passage (A) is configured from an internal channel that leads from the exterior air introducing port to the vent blow-out port of the HVAC (4).

18. Vehicle ventilation system according to Claim 16, **characterized in that** the abovementioned exhaust passage (B) is provided on both the left and right sides of the vehicle.

19. Vehicle ventilation system according to Claim 16, **characterized in that** the abovementioned intake passage (A) is configured from an internal channel that leads from the exterior air introducing port to the defrost blow-out port, vent blow-out port and foot blow-out port of the HVAC (4).

## Patentansprüche

1. Fahrzeug-Belüftungssytem, umfassend zumindest zwei Verbindungsteile (A, B), die eine Verbindung zwischen dem Fahrzeuginnenraum und dem Fahrzeugaußenraum bereitstellen, Öffnungsmittel, die im Wesentlichen gleichzeitig die entsprechenden Verbindungsteile öffnen, einen Verdampfer (12) und ein Gebläse (11) für die Belüftung, angeordnet in der Nähe von zumindest einem Öffnungsmittel, **dadurch gekennzeichnet, dass** es ein Innentemperatur-Erfassungsmittel (22) umfasst, das die Innentemperatur des Fahrzeugs erfasst, einen Gassensor (21), der die Konzentration von Gasen in der Außenluft erfasst, einen Nach-Verdampfungs-Sensor (23), der in der nachgeschalteten Seite des Verdampfers (12) angeordnet ist, eine Steuereinheit (20), die Signale vom Gassensor (21), vom Innentemperatur-Erfassungsmittel (22) und vom Nach-Verdampfungs-Sensor (23) erhält, wobei die Steuereinheit (20) die Steuerung der Öffnungsmittel und die Steuerung der Drehrichtung oder der Drehgeschwindigkeit des Gebläses (11) antreibt, und ein Luftmengen-Umschaltmittel, das, in Begeleitung des Anstiegs der Innentemperatur des Fahrzeugs, erfasst vom Innentemperatur-Nachweismittel, die Menge der vom Gebläse (11) geblasenen Luft erhöht.

2. Fahrzeug-Belüftungssystem nach Anspruch 1, **dadurch gekennzeichnet, dass** die zwei Verbindungsteile (A, B) von einem Einlasskanal (A) konfiguriert sind, der im hinteren Teil des Fahrzeuginnenraums bereitgestellt ist, und einem Abzugskanal (B), der im vorderen Teil des Fahrzeuginnenraums bereitgestellt ist, wobei der Abzugskanal (B) von einem HVAC (4) konfiguriert ist, das im vorderen Teil des Fahrzeuginnenraums bereitgestellt ist.

3. Fahrzeug-Belüftungssystem nach Anspruch 1 oder Anspruch 2, **dadurch gekennzeichnet, dass** die Gebläsevorrichtung (11) eine Gebläseeinheit des HVAC (4) bildet.

4. Fahrzeug-Belüftungssystem nach Anspruch 3, **dadurch gekennzeichnet, dass** der Abzugskanal (B) von der Gebläseeinheit (11) des HVAC (4) konfiguriert ist, wobei diese Einheit die Einführung der Fahrzeug-Innenluft (7) bereitstellt, und einem Rücklaufkanal, der einen Außenluft-Einführungs-Anschluss (8) mit der nachgeschalteten Seite mithilfe des Gebläses der Gebläseeinheit verbindet, wobei das Öffnungsmittel (9) des Abzugskanals von einer Öffnungs-/Verschlussklappe konfiguriert ist, die entweder im Einlass für den Rücklaufkanal oder auf dessen Länge bereitgestellt ist.

5. Fahrzeug-Belüftungssystem nach Anspruch 2, **dadurch gekennzeichnet, dass** das der Abzugskanal (8) von einem internen Kanal konfiguriert ist, der von einem Entfrostungs-Ausblase-Anschluss zum äußeren Lüfteinführungs-Anschluss des HVAC (4) führt.

6. Fahrzeug-Belüftungssystem nach Anspruch 2, **dadurch gekennzeichnet, dass** der Abzugskanal (8) von einem internen Kanal konfiguriert ist, der vom HVAC (4) Entfrostungs-Ausblase-Anschluss, Entlüftungs-Ausblase-Anschluss und Fuß-Ausblase-Anschluss zum außeren Lüfteinführungs-Anschluss führt.

7. Fahrzeug-Belüftungssystem nach Anspruch 1, **dadurch gekennzeichnet, dass** die zwei Verbindungsteile von einem Einlasskanal (A) konfiguriert sind, der in den vorderen Teil des Fahrzeuginnenraums öffnet, und einem Abzugskanal (B), der in den hinteren Teil des Fahrzeuginnenraums öffnet, wobei die Gebläsevorrichtung entweder über dem Abzugskanal oder in der Nähe davon bereitgestellt ist.

8. Fahrzeug-Belüftungssystem nach Anspruch 7, **dadurch gekennzeichnet, dass** der Einlasskanal (A) von einem internen Kanal konfiguriert ist, der vom äußeren Lüfteinführungs-Anschluss zum Entlüftungs-Ausblase-Anschluss des HVAC (4) führt.

9. Fahrzeug-Belüftungssystem nach Anspruch 7, **dadurch gekennzeichnet, dass** der Einlasskanal (A) von einem internen Kanal konfiguriert ist, der vom äußeren Lüfteinführungs-Anschluss zum Entfrostungs-Ausblase-Anschluss des HVAC (4) führt.

10. Fahrzeug-Belüftungssystem nach Anspruch 1, **dadurch gekennzeichnet, dass** die zwei Verbindungsteile von einem Einlasskanal (A) konfiguriert sind, der in zumindest einen des entweder vorderen Teils des Fahrzeuginnenraums oder des hinteren Teils des Fahrzeuginnenraums öffnet und einem Abzugskanals (B), der in den mittleren Teil des Fahrzeuginnenraums öffnet, wobei die Gebläsevorrichtung entweder über dem Abzugskanal (B) oder in der Nähe davon bereitgestellt ist.

11. Fahrzeug-Belüftungssystem nach Anspruch 10, **dadurch gekennzeichnet, dass** der Einlasskanal (A) von einem internen Kanal konfiguriert ist, der vom äußeren Lüfteinführungs-Anschluss zum Entlüftungs-Ausblase-Anschluss und Fuß-Ausblase-Anschluss des HVAC (4) führt.

12. Fahrzeug-Belüftungssystem nach Anspruch 10, **dadurch gekennzeichnet, dass** der Einlasskanal (A) von einem Kanal konfiguriert ist, der im hinteren Teil des Fahrzeuginnenraums gebildet ist, und einem internen Kanal, der vom äußeren Lüfteinführungs-Anschluss zum Entfrostungs-Ausblase-Anschluss des HVAC (4) führt.

13. Fahrzeug-Belüftungssystem nach Anspruch 10, **dadurch gekennzeichnet, dass** der Einlasskanal (A) von einem internen Kanal konfiguriert ist, der vom äußeren Lüfteinführungs-Anschluss zum Entlüftungs-Ausblase-Anschluss des HVAC (4) führt.

14. Fahrzeug-Belüftungssystem nach Anspruch 10, **dadurch gekennzeichnet, dass** der Einlasskanal (A) im HVAC (4) im hinteren Teil des Fahrzeugs bereitgestellt ist.

15. Fahrzeug-Belüftungssystem nach Anspruch 10, **dadurch gekennzeichnet, dass** der Abzugskanal (B) von einem Entlüftungsrohr konfiguriert ist, das im Fahrzeug bereitgestellt ist, wobei die Gebläsevorrichtung (11) ein Belüftungsmodul bildet, das im Entlüftungsrohr bereitgestellt ist.

16. Fahrzeug-Belüftungssystem nach Anspruch 1, **dadurch gekennzeichnet, dass** die zwei Verbindungsteile von einem Einlasskanal (A) konfiguriert sind, der in den vorderen Teil des Fahrzeuginnenraums öffnet, und einem Abzugskanal (B), der in den hinteren Teil des Fahrzeuginnenraums öffnet, wobei die Gebläsevorrichtung (11) über dem Einlasskanal (A) oder in der Nähe davon bereitgestellt ist.

17. Fahrzeug-Belüftungssystem nach Anspruch 16, **dadurch gekennzeichnet, dass** der Einlasskanal (A) von einem internen Kanal konfiguriert ist, der vom äußeren Lufteinführungs-Anschluss zum Entlüftungs-Ausblase-Anschluss des HVAC (4) führt.

18. Fahrzeug-Belüftungssystem nach Anspruch 16, **dadurch gekennzeichnet, dass** der Abzugskanal (B) sowohl auf der linken als auch auf der rechten Seite des Fahrzeugs bereitgestellt ist.

19. Fahrzeug-Belüftungssystem nach Anspruch 16, **dadurch gekennzeichnet, dass** der Einlasskanal (A) von einem internen Kanal konfiguriert ist, der vom äußeren Lufteinführungs-Anschluss zum Entfrostungs-Ausblase-Anschluss, Entlüftungs-Ausblase-Anschluss und Fuß-Ausblase-Anschluss des HVAC (4) führt.

## Revendications

1. Système de ventilation de véhicule, comprenant au moins deux parties de raccord (A, B) qui permettent un raccord entre l'intérieur de véhicule et l'extérieur de véhicule, des moyens d'ouverture qui ouvrent essentiellement simultanément les parties de raccord respectives susmentionnées, un évaporateur (12) et un ventilateur (11) pour la ventilation agencée dans le voisinage d'au moins un des moyens d'ouverture, **caractérisé en ce qu'**il comprend un moyen de détection de température intérieure (22) qui détecte la température intérieure du véhicule, un capteur de gaz (21) qui détecte la concentration en gaz dans l'air extérieur, un capteur post-évaporation (23) agencé dans le côté aval de l'évaporateur (12), une unité de commande (20) recevant des signaux à partir du capteur de gaz (21), du moyen de détection de température intérieure (22) et du capteur post-évaporation (23), l'unité de commande (20) entraînant la commande des moyens d'ouverture et la commande de direction de rotation ou vitesse de rotation du ventilateur (11), et un moyen de changement de quantité d'air qui, accompagnant l'augmentation de la température intérieure du véhicule détectée par le moyen de détection de température intérieure, augmente la quantité d'air soufflé par le ventilateur (11).

2. Système de ventilation de véhicule selon la revendication 1, **caractérisé en ce que** les deux parties de raccord susmentionnées (A, B) sont configurées à partir d'un passage d'admission (A) prévu dans la partie arrière du compartiment de véhicule et d'un passage d'évacuation (B) prévu dans la partie avant du compartiment de véhicule, dans lequel le passage d'évacuation susmentionné (B) est configuré à partir d'un HVAC (4) prévu dans la partie avant du compartiment de véhicule.

3. Système de ventilation de véhicule selon la revendication 1 ou la revendication 2, **caractérisé en ce que** le dispositif de ventilateur susmentionné (11) constitue une unité de ventilateur du HVAC susmentionné (4).

4. Système de ventilation de véhicule selon la revendication 3, **caractérisé en ce que** le passage d'évacuation susmentionné (B) est configuré à partir de l'unité de ventilateur susmentionnée (11) du HVAC susmentionné (4), laquelle unité permet l'introduction d'air intérieur de véhicule (7) et un passage de retour qui raccorde un orifice d'introduction d'air extérieur (8) avec le côté aval au moyen du ventilateur de l'unité de ventilateur, dans lequel le moyen d'ouverture (9) du passage d'évacuation susmentionné est configuré à partir d'un registre d'ouverture/fermeture prévu dans l'entrée pour le passage de retour susmentionné ou sur sa longueur.

5. Système de ventilation de véhicule selon la revendication 2, **caractérisé en ce que** le passage d'évacuation susmentionné (B) est configuré à partir d'un canal interne qui conduit d'un orifice de soufflement de sortie de dégivrage à l'orifice d'introduction d'air extérieur du HVAC susmentionné (4).

6. Système de ventilation de véhicule selon la revendication 2, **caractérisé en ce que** le passage d'évacuation susmentionné (B) est configuré à partir d'un canal interne qui conduit de l'orifice de soufflement de sortie de dégivrage, de l'orifice de soufflement de sortie de ventilation et de l'orifice de soufflement de sortie pour les jambes du HVAC susmentionné (4) à l'orifice d'introduction d'air extérieur.

7. Système de ventilation de véhicule selon la revendication 1, **caractérisé en ce que** les deux parties de raccord susmentionnées sont configurées à partir d'un passage d'admission (A) qui donne dans la partie avant du compartiment de véhicule et d'un passage d'évacuation (B) qui donne dans la partie arrière du compartiment de véhicule, dans lequel le dispositif de ventilateur susmentionné est prévu au-dessus du passage d'évacuation susmentionné ou dans son voisinage.

8. Système de ventilation de véhicule selon la revendication 7, **caractérisé en ce que** le passage d'admission susmentionné (A) est configuré à partir d'un canal interne qui conduit de l'orifice d'introduction d'air extérieur à l'orifice de soufflement de sortie de ventilation du HVAC (4).

9. Système de ventilation de véhicule selon la revendication 7, **caractérisé en ce que** le passage d'admission susmentionné (A) est configuré à partir d'un canal interne qui conduit de l'orifice d'introduction d'air extérieur à l'orifice de soufflement de sortie de dégivrage du HVAC (4).

10. Système de ventilation de véhicule selon la revendication 1, **caractérisé en ce que** les deux parties de raccord susmentionnées sont configurées à partir d'un passage d'admission (A) qui donne dans au moins une parmi la partie avant du compartiment de véhicule ou la partie arrière du compartiment de véhicule et un passage d'évacuation (B) qui donne dans la partie médiane du compartiment de véhicule, dans lequel le dispositif de ventilateur susmentionné est prévu au-dessus du passage d'évacuation susmentionné (B) ou dans son voisinage.

11. Système de ventilation de véhicule selon la revendication 10, **caractérisé en ce que** le passage d'admission susmentionné (A) est configuré à partir d'un canal interne qui conduit de l'orifice d'introduction d'air extérieur à l'orifice de soufflement de sortie de ventilation et l'orifice de soufflement de sortie pour les jambes du HVAC (4).

12. Système de ventilation de véhicule selon la revendication 10, **caractérisé en ce que** le passage d'admission susmentionné (A) est configuré à partir d'un passage formé dans la partie arrière du compartiment de véhicule et d'un canal interne qui conduit de l'orifice d'introduction d'air extérieur à l'orifice de soufflement de sortie de dégivrage du HVAC (4).

13. Système de ventilation de véhicule selon la revendication 10, **caractérisé en ce que** le passage d'admission susmentionné (A) est configuré à partir d'un canal interne qui conduit de l'orifice d'introduction d'air extérieur à l'orifice de soufflement de sortie de ventilation du HVAC (4).

14. Système de ventilation de véhicule selon la revendication 10, **caractérisé en ce que** le passage d'admission susmentionné (A) est prévu dans le HVAC (4) dans la partie arrière du véhicule.

15. Système de ventilation de véhicule selon la revendication 10, **caractérisé en ce que** le passage d'évacuation (B) est configuré à partir d'un conduit de ventilation prévu dans le véhicule, dans lequel le dispositif de ventilateur susmentionné (11) constitue un module de ventilation prévu dans le conduit de ventilation susmentionné.

16. Système de ventilation de véhicule selon la revendication 1, **caractérisé en ce que** les deux parties de raccord susmentionnées sont configurées à partir d'un passage d'admission (A) qui donne dans la partie avant du compartiment de véhicule et d'un passage d'évacuation (B) qui donne dans la partie arrière du compartiment de véhicule, dans lequel le dispositif de ventilateur susmentionné (11) est prévu au-dessus du passage d'admission susmentionné (A) ou dans son voisinage.

17. Système de ventilation de véhicule selon la revendication 16, **caractérisé en ce que** le passage d'admission susmentionné (A) est configuré à partir d'un canal interne qui conduit de l'orifice d'introduction d'air extérieur à l'orifice de soufflement de sortie de ventilation du HVAC (4).

18. Système de ventilation de véhicule selon la revendication 16, **caractérisé en ce que** le passage d'évacuation susmentionné (B) est prévu sur les côtés gauche et droit du véhicule.

19. Système de ventilation de véhicule selon la revendication 16, **caractérisé en ce que** le passage d'admission susmentionné (A) est configuré à partir d'un canal interne qui conduit de l'orifice d'introduction d'air extérieur à l'orifice de soufflement de sortie de dégivrage, l'orifice de soufflement de sortie de ventilation et l'orifice de soufflement de sortie pour les jambes du HVAC.
